# EUROPEAN PATENT APPLICATION

(11) **EP 0 565 261 A1**
(43) Date of publication of application: **13.10.1993**
(21) Application number: 93302145.3
(22) Date of filing: 22.03.1993
(51) Int. Cl.: G01J 3/26

(54) **Optical devices**

(30) Priority: 10.04.1992 GB 9207996
(71) Applicant: GEC-MARCONI LIMITED, Stanmore, Middlesex HA7 4LY (GB)
(72) Inventor: Stewart, William James, Blakesley, Northants, NN12 8RE (GB)
(74) Representative: Pope, Michael Bertram Wingate

(57) **Abstract**

An optical device comprising a pair of facing semi-reflective layers (3, 5) forming a Fabry-Perot resonator wherein the spacing between the layers is slightly greater in a central region (9) of the resonator than in the surrounding area. As a result the divergence of light in an input beam applied to the device in the central region, and hence the linewidth of the transmission resonance of the device, is reduced.

## Description

This invention relates to optical devices.

More particularly the invention relates to optical devices of the kind comprising a pair of facing semi-reflective layers separated by a distance such as to form a Fabry-Perot resonator at optical frequencies. Such devices find application in optical components such as lasers, optical modulators and optical filters.

It is well known that the linewidth of the transmission resonance of such a device is increased by angular divergence of light waves passing through, because the resonant frequency increases with the angle of incidence of the waves on the semi-reflective layers. This applies to any input light beam that can be regarded as a superposition of plane waves, even to a confined plane wave such as that emerging from the end of an optical fibre, i.e. even although the Poynting vectors are all perpendicular to the semi-reflective surfaces, the diffraction divergence then being the relevant value.

The conventional solutions to this difficulty are:-
1) To expand the input light beam using a lens so that the angular divergence at the resonator is low enough to give an acceptable linewidth.
2) To make the resonator from a short length of polished optical fibre.

The first solution suffers from the disadvantage that it is costly and leads to a bulky arrangement requiring accurate alignment of components. The second solution suffers from the disadvantage that such a resonator is relatively complex to fabricate, has limited tunability, and is not easily adapted for use in different applications.

In addition neither solution is very suitable for use in optical arrangements where the devices are of planar form, carried on a main face of a wafer or other substrate and the direction of light propagation is across the thickness of the substrate. Such arrangements are of particular interest since they are insensitive to polarization, are easily coupled to optical fibres and allow a high density of devices on a substrate.

It is an object of the present invention to provide a Fabry-Perot resonator wherein the above- described disadvantages are alleviated.

According to the present invention there is provided an optical device comprising a pair of facing semi-reflective layers separated by a distance such as to form a Fabry-Perot resonator at optical frequencies, wherein said distance is greater in a region where an input light beam is applied to the device in operation than in an area surrounding said region by an amount such as to enhance confinement of the output beam of said device to said region.

Preferably said distance reduces in a step to a smaller value at the edge of said region.

Several devices in accordance with the invention will now be described, by way of example, with reference to the accompanying drawings in which:-
Figure 1 is a diagrammatic cross-sectional view of a Fabry-Perot resonator in accordance with the invention;
Figure 2 is a diagrammatic cross-sectional view of a conventional Fabry-Perot resonator;
Figure 3 is a diagrammatic cross-sectional view of an optical coupler in accordance with the invention; and
Figure 4 is a diagrammatic cross-sectional view of an optical bend device in accordance with the invention.

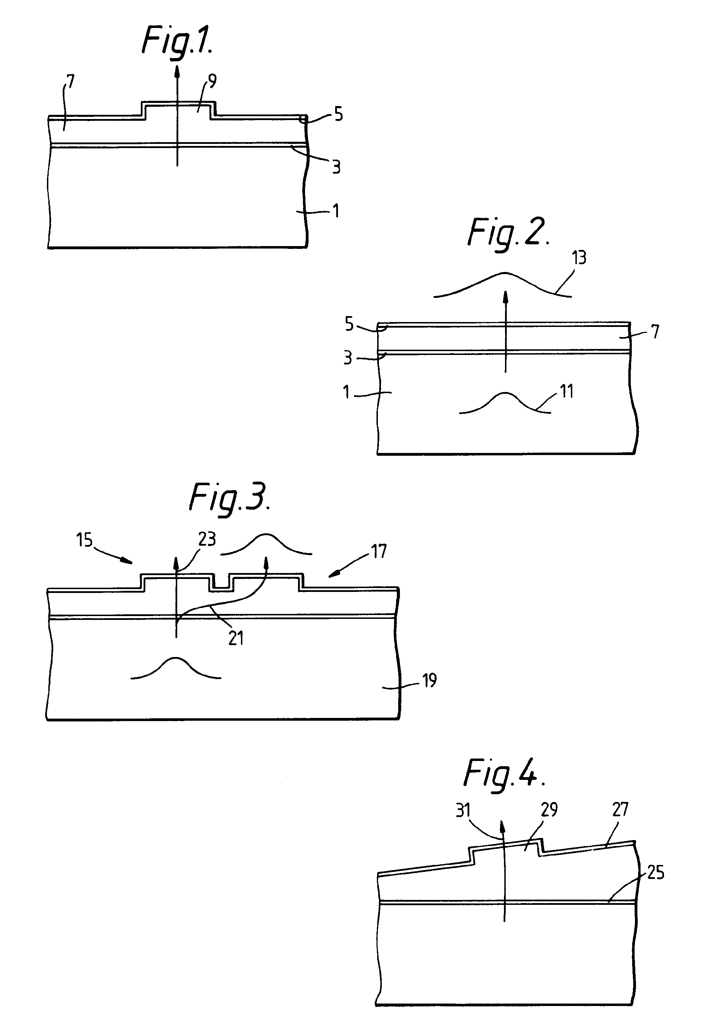

Referring to Figure 1, the first embodiment of the invention to be described is a single Fabry-Perot resonator. The resonator is carried on a light transmissive substrate 1 and comprises parallel semi-reflective mirror layers 3 and 5 formed on opposite surfaces of a layer 7 of light transmissive material. The semi-reflective layers 3, 5 suitably consist of a metal such as silver or aluminium but may alternatively comprise dielectric multilayer stacks.

In use of the device an input beam from a source (not shown) in the substrate 1 is directed into the layer 7 through the near mirror layer 7 in a direction normal to the planes of the layers 3, 5 and layer 7, as indicated by the arrow. The resonator acts as a filter which transmits in known manner only light in the input beam in the region of a resonance frequency dependent on the spacing t of the mirror layers 3, 5 and the refractive index of the material of the layer 7.

In accordance with the invention, to reduce the linewidth of transmission through the device, there is formed a stud-like projection 9 on the output side of the resonator so that, in the region where the input beam is applied, the layer 7 is slightly thicker than in the surrounding region.

The projecting stud 9 preferably has a height dt of less than 1% of the nominal thickness t of the layer 7 so that it does not significantly affect the transmission through, or the reflection in, the device of ordinary light, i.e. light of a frequency outside the linewidth of the device.

The reason why the stud 9 counteracts the increase in transmission linewidth due to diffraction divergence which occurs in a conventional Fabry-Perot resonator can be explained as follows.

Referring to Figure 2, in a conventional resonator having no stud 9, when an input beam of light of appropriate frequency having a Gaussian energy distribution is directed onto the device, as indicated by line 11, the output beam is of relatively large cross-sectional area, as indicated by line 13. This is due to diffraction divergence which results in imperfect superposition of the waves in the output beam which have been reflected a relatively large number of times.

If the resonator were formed in a waveguide, e.g. a length of optical fibre, the diffraction would be prevented by the confining effect of the reduction in the value of the refractive index at the perimeter of the light beam in the waveguide i.e. between core and cladding of the optical fibre. The linewidth of the resonator could then be made as small as desired. In the case of a Fabry-Perot resonator of planar form as shown in Figure 2, such an index step is not very convenient. Instead, in accordance with the invention, the resonant cavity is made very slightly thicker in the region of the input beam. This is, of course, equivalent to raising the index in that light multiply reflected in the region of the stud 9 in Figure 1 has slightly further to travel and is therefore phase delayed with respect to light in the surrounding region.

It will be appreciated that by analogy with the guiding effect of regions of different refractive index in an optical waveguide, the actual cross-sectional shape of the stud 9 is not very important, although normally it will be convenient for it to be circular. However, the height and cross-sectional area of the stud 9 will have to be appropriately matched to the input beam to obtain the desired 'guiding' effect. It will be appreciated in this connection that for larger area resonators a plurality of studs may be used. The areas between studs in such an arrangement will normally need to be masked. Such an arrangement could be used to provide a planar filter, e.g. for use in an imaging instrument, with a wide field and a narrow passband.

ltwill be appreciated that the principle of the present invention may be utilised in optical devices other than the single resonator device of Figure 1.

Referring to Figure 3 in a second embodiment of the invention two Fabry-Perot 15 and 17 resonators of the form shown in Figure 1 are fabricated on a common substrate 19 in close-spaced relationship so as to form a four-port coupler. Such an arrangement may be utilised to reduce off-resonance transmission in a Fabry-Perot filter by offsetting resonance frequency light as indicated by the arrow 21 in Figure 3from the path taken by off-resonance light, as indicated by arrow 23.

Referring to Figure 4 in a third embodiment of the invention a Fabry-Perot resonator device has its facing semi-reflective layers 25, 27 slightly off-parallel. A stud 29 formed on the output side of the resonator serves to cou nteract t he effect of divergence, as described above, so that the device serves to bend an input light beam applied to the device, as indicated by arrow 31.

It will be understood that a device in accordance with the invention finds application in virtually any optical device making use of a Fabry-Perot resonator e.g. in lasers, modulators and liquid crystal tunable filters.

Where, in a device according to the invention, the material between the semi-reflective layers is a semiconductor material the device may suitably be fabricated by selectively etching the outer surface of the semiconductor material to form a projecting stud before overgrowing the semi-reflective layer on that surface of the semiconductor layer. Where the material between the semi-reflective layers is a liquid crystal material, e.g. in a tunable optical filter, a small well may be etched into the inner surface of one of the two windows enclosing the liquid crystal material, the semi-reflective layers being formed on the outer surfaces of the windows.

## Claims

1. An optical device comprising a pair of facing semi-reflective layers (3, 5) separated by a distance such as to form a Fabry-Perot resonator at optical frequencies, characterised in that said distance is greater in a region (9) where an input beam is applied to the device in operation than in an area surrounding said region (9) by an amount such as to enhance confinement of the output beam of said device to said region (9).

2. A device according to Claim 1 wherein said distance reduces in a step to a smaller value at the edge of said region (9).

3. A device according to Claim 1 or Claim 2 wherein said distance in said region (9) is less than 1% greater than said distance in said surrounding area.

4. A device according to any one of the preceding claims wherein said distance is substantially uniform throughout said region (9).

5. A device according to any one of the preceding claims wherein said semi-reflective layers (3, 5) are parallel.

6. A device according to any one of the preceding claims wherein said semi-reflective layers (3, 5) are separated by a semiconductor material.

7. A device according to any one of Claims 1 to 5 wherein said semi-reflective layers (3, 5) are separated by a liquid crystal material.

8. A device according to any one of the preceding claims wherein said resonator is formed on a light transmissive substrate (1) and said input beam is applied to the device from the substrate (1) in a direction substantially normal to the planes of said semi-reflective layers (3, 5).

9. An optical arrangement comprising two optical devices according to any one of the preceding claims, the Fabry-Perot resonators of the two devices being fabricated in close-spaced relationship so as to form a four-port optical coupler.
